# EUROPÄISCHE PATENTSCHRIFT

(11) **EP 1 673 696 B1**
(45) Veröffentlichungstag und Bekanntmachung des Hinweises auf die Patenterteilung: **27.02.2008**
(21) Anmeldenummer: 04790389.3
(22) Anmeldetag: 14.10.2004
(51) Int. Cl.: G06F 9/445, G06F 9/455

(54) **VERFAHREN UND EINRICHTUNG ZUM BETREIBEN EINES SEKUNDÄR-BETRIEBSSYSTEMS NEBEN EINEM PRIMÄR-BETRIEBSSYSTEM**
METHOD AND DEVICE FOR OPERATING A SECONDARY OPERATING SYSTEM AUXILIARY TO A PRIMARY OPERATING SYSTEM
PROCEDE ET DISPOSITIF POUR FAIRE FONCTIONNER UN SYSTEME D'EXPLOITATION SECONDAIRE EN PLUS D'UN SYSTEME D'EXPLOITATION PRIMAIRE

(30) Priorität: 16.10.2003 DE 10348113
(43) Veröffentlichungstag der Anmeldung: 28.06.2006
(73) Patentinhaber: KUKA Roboter GmbH, 86165 Augsburg (DE)
(72) Erfinder: GRÖSCHEL, Andreas, 88267 Vogt (DE); EHRLINSPIEL, Jörg, 88636 Illmensee (DE); ZINTGRAF, Stefan, 88250 Weingarten (DE)
(74) Vertreter: Lichti, Heiner
(86) Internationale Anmeldenummer: PCT/EP2004/011526
(87) Internationale Veröffentlichungsnummer: WO 2005/038651

(56) Entgegenhaltungen:
- EP-A- 1 054 322
- US-A- 5 483 647
- "Dual System Operation" IBM TECHNICAL DISCLOSURE BULLETIN, IBM CORP. NEW YORK, US, Bd. 11, Nr. 12, April 1990 (1990-04), Seiten 1899-12800, XP002075223 ISSN: 0018-8689
- "JALUNA-2 PREVIEW RELEASE 1 DESCRIPTION" JALUNA REPORT, XX, XX, Dezember 2002 (2002-12), Seiten 1,3,5-32, XP001189063

## Beschreibung

Die Erfindung betrifft ein Verfahren und eine Einrichtung zum Betreiben eines Sekundär-Betriebssystems auf einem Rechner neben einem Primär-Betriebssystem nach dem Oberbegriff des Anspruchs 1 bzw. des Anspruchs 19.

Das Betreiben zweier auf einem Rechner, genauer in den Random-Access-Speicher eines Rechners geladener Betriebssystems nicht nur alternativ, sondern wechselweise ohne Neustarten des Rechners ist bekannt.

So zeigt die WO 98/09225 ein Betriebssystem zur Echtzeiterweiterung für die herkömmlichen - an sich nicht echtzeitfähigen - Microsoft-Windows-Systeme durch spezielle Mikrokerne (Microkernel).

Die DE 44 06 094 C2 zeigt ebenfalls eine Echtzeiterweiterung der herkömmlichen Microsoft-Windows-Systeme mittels eines vollständigen Echtzeit-Betriebssystems, welches auch separat, d.h. unabhängig von Windows auf einem Rechner lauffähig ist. Das sekundäre Echtzeit-Betriebssystem hat dabei direkten Zugriff auf lediglich eine Untermenge der Prozessor-Register und Hardware-Komponenten des Rechners.

Es ist weiterhin bekannt unter einem Betriebssystem einen virtuellen Rechner (virtual machine) zu emulieren, auf dem dann ein zweites Betriebssystem laufen kann. Hier läuft das Sekundär-Betriebssystem unter Kontrolle des den virtuellen Rechner emulierenden Monitor-Programms. Das Sekundär-Betriebssystem kann nicht auf sämtliche Register des Prozessors direkt zugreifen, sondern eben nur unter Kontrolle des Monitor-Programms. Grundsätzlich ist beim Stand der Technik problematisch, dass der Quellcode zumindest eines der Betriebssysteme bekannt sein muss, da beim Betrieb in üblicherweise vom Anbieter nicht-offenbarte Teile desselben eingegriffen wird oder sogar Veränderungen an solchen Teilen, insbesondere denselben Teilen, an mindestens einem der Betriebssysteme vorgenommen werden müssen. Darüber hinaus ist es nachteilig, wenn ein Betriebssystem "unter" einem anderen laufen muss, also eingebettet in letzteres (embedded).

Die Veröffentlichung "Dual System Operation" in IBM Technical Disclosure Bulletin Bd. 11, Nr. 12, April 1990, Seiten 1899-1900 (D1) beschreibt solch ein Verfahren, wobei das Primär-Betriebssystem (z.B. IBM System/360 Disk Operating System, DOS) in einer unteren Partitionierung und das Sekundär-Betriebssystem (z.B. IBM System/360 Remote Access Computing System, RAX) in einer oberen Partitionierung des Systemspeichers angesiedelt ist. Beide Betriebssysteme arbeiten unabhängig voneinander und ein Betriebssystem-Wechsel wird mittels einer Dispatcher-Routine gesteuert, die auf beide Betriebssysteme zugreift und die somit den einzigen Verknüpfungspunkt zwischen den Betriebssystemen darstellt. Dabei übernimmt der Dispatcher das Speichern bzw. die Wiederherstellung des Zustands des jeweiligen Betriebssystems vor bzw. nach dem Betriebssystem-Wechsel. Ein Wechsel vom Primär-Betriebssystem zum Sekundär-Betriebssystem wird durch einen Unterbrechungs-Aufruf (Interrupt) hervorgerufen, der vom Dispatcher abgefangen wird, der zunächst feststellt, ob der jeweilige Unterbrechungs-Aufruf einem Betriebssystem-Wechsel zugeordnet ist, bevor er diesen gegebenenfalls einleitet. Ist die Abarbeitung des jeweiligen Prozesses vom Sekundär-Betriebssystem beendet, wird der Dispatcher durch einen zugeordneten Unterbrechungs-Aufruf dazu veranlasst, einen Rückwechsel vom Sekundär-Betriebssystem zum Primär-Betriebssystem einzuleiten.

Das Implementieren eines solchen Verfahrens setzt jedoch eine Anpassung des Quellcodes der Betriebssysteme, insbesondere des Kerns der Betriebssysteme, voraus, welcher in den meisten Fällen nicht offengelegt ist.

Die US 5,483,647 A, betrifft kein Verfahren zum Betreiben (Implementieren) eines Sekundär-Betriebssystems auf einem Prozessor neben einem Primär-Betriebssystem. Es handelt sich dagegen um zwei Betriebssysteme, die jeweils auf einem Prozessor, insgesamt also auf zwei getrennten Prozessoren ablaufen.

Die Druckschrift "Jaluna-2 Preview Release 1 Description", Dezember 2002, beschreibt lediglich ein Softwarepacket zum Betreiben (Implementieren) eines Sekundär-Betriebssystems (Linux) auf einem Prozessor, eingebettet (embedded) in ein Primär-Betriebssystem (C5 Echtzeit-Mikrokern), welches mittels des jeweiligen Betriebssystem-Kerns und/oder des zugehörigen BSPs konfiguriert werden kann. Das Verfahren zum Wechsel vom Primär-Betriebssystem zum Sekundär-Betriebssystem wird nicht beschrieben.

Beim Gegenstand der EP 1 054 322 A2 wird ein gemeinsamer Interrupt-Handler zusammen mit einer Interrupt-Management-Tabelle auf einer gemeinsamen Betriebsystem-Wechsel-Einheit von beiden Betriebssystemen verwendet. Die Druckschrift offenbart insofern kein Verfahren und keine Vorrichtung zum durch einen Unterbrechungsaufruf (Interrupt) hervorgerufenen Wechsel vom Primär-Betriebssystem zum Sekundär-Betriebssystem.

Der Erfindung liegt die Aufgabe zugrunde, ein Verfahren und eine Einrichtung zu schaffen, mittels derer auf einem Rechner mindestens zwei Betriebssysteme ohne Reduzierung ihrer Performance, insbesondere unter Beibehaltung von Echtzeitfähigkeiten ohne Eingriff in das Sekundär-Betriebssystem, sondern höchstens mit Eingriffen in dessen Board Support Packet laufen können, wobei das Sekundär-Betriebssystem dennoch, wenn es aktiv ist, auf der zentralen Prozessoreinheit (CPU) derart arbeitet, als ob es als - einziges - Betriebssystem geladen ist und demgemäß auf den gesamten Prozessor und dessen virtuellem Speicherbereich ohne jegliche Einschränkung zugreifen kann.

Erfindungsgemäß wird die genannte Aufgabe durch ein Verfahren mit den Merkmalen des Anspruchs 1 und durch eine Vorrichtung mit den Merkmalen des Anspruchs 19 gelöst.

Erfindungsgemäß erfolgt so der Zugriff des Sekundär-Betriebs-systems ohne Zuhilfenahme des Primär-Betriebssystems.

Die Ausgestaltung, dass die beiden Betriebssysteme nebeneinander auf einem Rechner implementiert sind, heißt, dass beide Betriebssysteme völlig unabhängig voneinander auf diesen arbeiten, insbesondere die Betriebssysteme einander nicht voraussetzen - also auch nicht das Sekundär-Betriebssystem das funktionsfähige Vorhandensein des Primär-Betriebssystems. Der System-Treiber wird ausschließlich zum Wechsel der Betriebssysteme verwendet. Man könnte also den gesamten Sicherheitsbereich des PBS inkl. des System-Treibers im SBS überschreiben, ohne dessen Funktion zu beeinträchtigen, ein Rücksprung zum PBS ist dann natürlich nicht mehr möglich. Insbesondere beinhaltet dies, dass nicht ein Betriebssystem (insbesondere das Sekundär-Betriebssystem) auf dem anderen (insbesondere dem Primär-Betriebssystem) aufsitzt, oder auch nur auf dieses zugreifen würde. Während Betrieb des einen Betriebssystems wird keinerlei Codeteil des anderen ausgeführt. Insbesondere greift das Sekundär-Betriebssystem während seines Betriebs auch nicht auf den System-Treiber zu. Erfindungsgemäß ist also kein Betriebssystem in das andere eingebettet, setzt also dieses nicht permanent voraus. Dies gilt insbesondere auch für das Sekundär-Betriebssystem hinsichtlich des Primär-Betriebssystems. Zum Aufrufen und Abarbeiten des einen Betriebssystems, insbesondere des Sekundär-Betriebssystems, sind auch keinerlei Informationen des anderen Betriebssystems, des Primär-Betriebssystems, einschließlich des System-Treibers im erstgenannten Betriebssystem (Sekundär-Betriebssystem) notwendig. Beide Betriebssysteme, insbesondere auch das Sekundär-Betriebssystem, sind vollkommen autonom lauffähig.

Durch das erfindungemäße Vorsehen eines Treibers des Primär-Betriebssystems zum Ansteuern und Laden des Sekundär-Betriebssystems über dessen Board-Support-Package, oder Platinen-Unterstützungs-Paket wird weiterhin vermieden, dass der Kern des Sekundär-Betriebssystems zum Betrieb desselben eben als Sekundär-Betriebssystem neben einem Primär-Betriebssystem geändert werden muss.

Das Board-Support-Package ist die Software, die die Verbindung zwischen einer Hardware (dem Board) und einem Betriebssystem bildet (Support). Betriebssysteme die auf mehreren Plattformen (Hardwareumgebung inkl. Prozessor, Speicher etc.) zum Einsatz kommen, haben immer ein BSP, das somit ein fester Bestandteil des Betriebssystems ist. Embedded Betriebssysteme, wie Windows CE, bestehen aus einem Betriebssystem-Kern und eben dem BSP, durch dessen Modifikation man das Betriebssystem auf eine spezielle Hardware-Plattform anpassen kann und auch muss, ohne den Betriebssystem-Kern kennen zu müssen.

Das Board-Support-Package eines Betriebssystems wird von dem Anbieter des Betriebssystems regelmäßig ohnehin im Quellcode offengelegt, da es insbesondere die sogenannten Basis-Hardware-Dienste enthält, über die für das fragliche Betriebssystem die notwendigen Schnittstellen zur Hardware, wie beispielsweise Interrupt-Controller, Systemzeitgeber, hergestellt werden und die hierzu zum Einsatz auf unterschiedlichen Hardware-Systemen, d.h. verschiedenen CPU-Plattformen entwickelt werden, wie von einem Hersteller spezifischer, insbesondere von den Quasi-Standard abweichender Hardware. Damit können durch die erfindungsgemäße Lösung alle Betriebssysteme als Sekundär-Betriebssystem eingesetzt werden, welche mit Hilfe eines Board-Support-Packages konfigurierbar und anpassbar sind, ohne dass diese bei Einsatz als Sekundär-Betriebssystem ihre Performance verlieren und, soweit es sich um Echtzeitbetriebssysteme handelt, ohne dass sie ihre Echtzeitfähigkeit verlieren.

Durch Austauschen der Interrupt-Tabellen im flüchtigen Speicher wird aufgrund der Informationen der Interrupt-Tabellen-Einträge des Sekundär-Betriebssystems bei einem Interrupt in das Sekundär-Betriebssystem die richtige Interrupt-Service-Routine des Sekundär-Betriebssytems angesprungen, so dass aus Sicht desselben derselbe Vorgang erfolgt, als wäre kein Primär-System vorhanden. Derart ist es möglich, zwei Betriebssysteme ohne Kenntnis des Quellcodes nebeneinander oder parallel zu betreiben. Erfindungsgemäß werden so keinerlei Informationen des Primär-Betriebssystems im Speicherbereich des Sekundär-Betriebssystems gespeichert. Beide Betriebssysteme besitzen keine Informationen über das jeweils andere.

In anderer bevorzugter Ausgestaltung des erfindungsgemäßen Verfahrens ist vorgesehen, dass der mit dem Primär-Betriebssystem geladene Sekundär-Betriebssystem-Treiber (SBS-Treiber) das Sekündär-Betriebssystem lädt und zwar in einen vom Primär-Betriebssystem nicht verwendeten Speicherbereich des physikalischen Random-Access-Speicher, vorzugsweise dessen oberen Bereich.

In bevorzugter Ausgestaltung ist vorgesehen, dass in der Zentraleinheit des Rechners (CPU) Speicherkontexte (virtuelle Arbeitsräume) geschaffen werden, wobei insbesondere der SBS-Treiber in der Zentraleinheit (CPU) einen Tunnelkontext aufsetzen kann, über den ein Wechsel des Arbeiten der Betriebssysteme vermittelt wird. Der als Kontext bezeichnete virtuelle Arbeitsraum setzt sich aus beliebigen Blöcken des physikalischen Speichers zusammen. Eine Memory-Management-Unit (MMU) verwaltet derartige Kontexte in einer als MMU-Tabelle bezeichneten Speicherzuordnungstabelle, mit der der Kontext beschrieben wird. Programmtechnisch bewegt man sich im virtuellen Adressraum der durch die Arbeitsweise der MMU auf den physikalischen Speicher verweist.

In Weiterbildung ist vorgesehen, dass nach dem Laden des Sekundär-Betriebssystems ein Einsprung in dasselbe und zwar genauer in das Board-Support-Paket erfolgt, welches in weiterer Ausbildung einen Kontext zum Booten des Sekundär-Betriebssystems im Prozessor aufsetzt.

In weiterer Ausbildung ist vorgesehen, dass in den Tunnel-Kontext unter anderem eine im Treiber enthaltene Tunnel-Speicherseite geladen wird, in welche der Programmablauf verzweigt, woraufhin über diese Programm-Codes des Sekundär-Betriebssystems in den neuen Speicherkontext geladen wird und der vollständige Bootvorgang des Sekundär-Betriebssystems fortgesetzt wird.

Zur Durchführung der vorgenannten Verfahrensschritte ist in bevorzugter Ausgestaltung der erfindungsgemäßen Einrichtung vorgesehen, dass der SBS-Treiber einen SBS-Ladeabschnitt sowie einen die Tunnel-Speicherseite beinhaltenden Tunnel-Bereich aufweist.

In bevorzugter Weiterbildung des erfindungsgemäßen Verfahrens erfolgt nach dem Laden bzw. bei jeglichem Betrieb des Sekundär-Betriebssystems ein Wechsel von diesem zum Primär-Betriebssystem entweder bei Ruhen des Sekundär-Betriebssystems (Eintritt desselben in seine Leerlaufschleife - Idle-Loop) oder aber durch einen entsprechenden Rücksprungbefehl im Programmablauf des Sekundär-Betriebssystems zum Rücksprung in das Primär-Betriebssystem.

Zur Durchführung dieses Verfahrensschritts sieht die erfindungsgemäße Einrichtung weiterhin vor, dass das Board-Support-Paket einen entsprechenden Rücksprung-Abschnitt aufweist.

Zum Wechsel vom Primär-Betriebssystem zum Sekundär-Betriebssystem durch eine für das Sekundär-Betriebssystem bestimmte SBS-Unterbrechungsanforderung weist der SBS-Treiber einen Unterbrechungs-Tabellen-Abschnitt auf, mittels dessen er im Primär-Betriebssystem eine Unterbrechungsaufruf-Tabelle (Interrupt-Tabelle) erzeugt, die - unter anderem - einen Aufruf einer Unterbrechungs-Behandlungsroutine zum Aufruf des Sekundär-Betriebssystems enthält.

In bevorzugter Weiterbildung des erfindungsgemäßen Verfahrens ist demgemäß vorgesehen, dass eine Unterbrechungs-Behandlungsroutine im SBS-Treiber die Unterbrechungs-Aufruf-Tabelle des Sekundär-Betriebssystems liest und die Verarbeitung des letzteren an der den Unterbrechungs-Aufruf betreffenden Stelle erfolgt bzw. fortgesetzt wird.

Erfolgt ein Unterbrechungs-Aufruf, der nicht für das Primär-Betriebssystem bestimmt ist, so fängt der SBS-System-Treiber diesen ab und leitet ihn über das Board-Support-Paket an das Sekundär-Betriebssystem weiter, so dass erfindungsgemäß ein Wechsel zwischen den Betriebssystemen mittels des SBS-Treibers des Primär-Betriebssystems und des Board-Support-Pakets des Sekundär-Betriebssystems erfolgt.

Insbesondere, soweit ein Prozessor nicht den direkten Wechsel von Kontexten unterstützt, ist erfindungsgemäß in weiterer Ausbildung vorgesehen, dass der Wechsel der Aktivität der Betriebssysteme mittels eines Tunnel-Bereichs in dem zusätzlich zum Primär-Betriebssystem - und zum Sekundär-Betriebssystem-Kontext aufgesetzten Tunnel-Kontext erfolgt.

In weiterer bevorzugter Ausgestaltung des erfindungsgemäßen Verfahrens ist vorgesehen, dass beim Wechsel von einem Betriebssystem zum anderen Betriebssystem alle Systemzustände (im Random-Access-Speicher) gespeichert werden, insbesondere sämtliche CPU-Register, und vorzugsweise darüber hinaus sämtliche prozessorinternen Caches geleert werden. In entsprechender Weiterbildung ist vorgesehen, dass beim Wechsel von einem Betriebssystem zum anderen Betriebssystem die neuen System-Zustände des anderen Betriebssystems, insbesondere CPU-Registerinhalte und Speichermanagement-(MMU-Tabellen) in den Prozessor geladen werden.

Schließlich sieht die Erfindung in weiterer Ausgestaltung vor, dass die Taktgenerierung für das Sekundär-Betriebssystem durch den Hardware-Hauptzeitgeber (Timer) erfolgt, also nur das Sekundär-Betriebssystem auf diesen Zugriff hat, während die Taktgenerierung für das Primär-Betriebssystem durch einen Takt-System-Treiber erfolgt. Dies ist insbesondere vorgesehen und vorteilhaft, wenn das Sekundär-Betriebssystem ein Echtzeit-Betriebssystem zur Steuerung einer industriellen Anlage oder Maschine ist, während das Primär-Betriebssystem zur Bedienung durch einen Bediener dient und diesem insbesondere eine ergonomische graphische Oberfläche zur Bedienung zur Verfügung stellt.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im Einzelnen erläutert ist. Dabei zeigt:
- Fig. 1: die Zuordnung von Primär- und Sekundär-Betriebssystem zu den einzelnen Ressourcen eines Rechners sowie den Aufbau eines Betriebssystems am Beispiel des Sekundär-Betriebssystems;
- Fig. 2: ein Diagramm zum Vorgang des Ladens des Sekundär-Betriebssystems sowie bei Ruhen des Sekundär-Betriebssystems des Rücksprungs in das Primär-Betriebssystem;
- Fig. 3: ein Wechsel vom Primär-Betriebssystem zum Sekundär-Betriebssystem; und
- Fig. 4: eine Darstellung zur Synchronisation der Uhr des Primär-Betriebssystems.

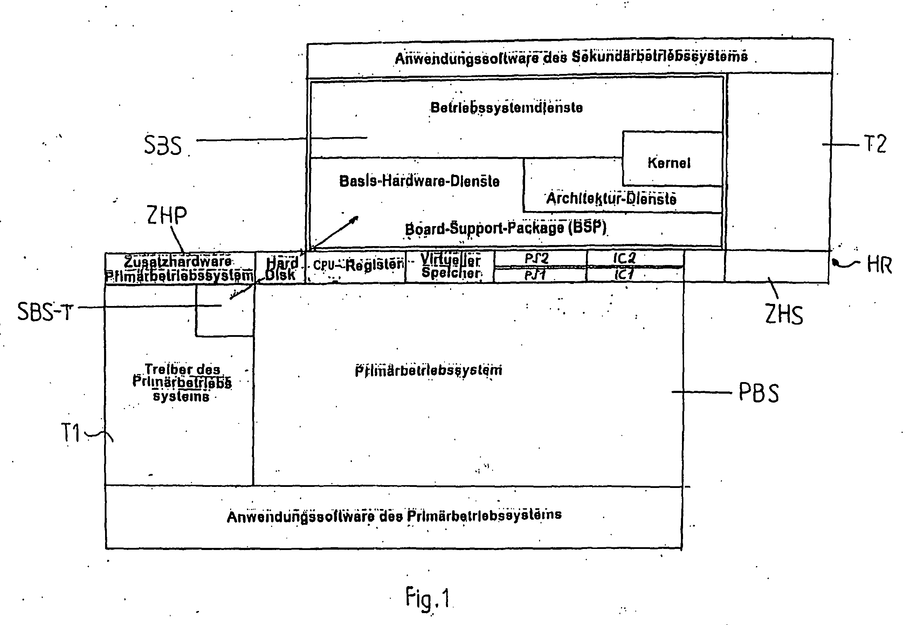

Die Fig. 1 zeigt die Zuordnung der (Hardware-)Ressourcen HR eines Rechners zum Primär-Betriebssystems PBS und zum Sekundär-Betriebssystem SBS im Rahmen der Erfindung. Sie zeigt weiterhin den prinzipiellen Aufbau eines Betriebssystems am Beispiel des Sekundär-Betriebssystems SBS.

Ein Betriebssystem weist zunächst einen Kern oder Kernel K als zentralen Kern desselben auf. Es weist weiterhin ein Board-Support-Package BSP oder Platinen-Unterstützungs-Paket auf, in dem die Basis-Hardwaredienste BHD implementiert sind. Diese stellen die für das Betriebssystem notwendigen Schnittstellen zur Hardware, wie zum Interrupt-Controller, Systemzeitgeber etc. dar. Die BHD ermöglichen es, das Betriebssystem auf unterschiedlichen Hardwaresystemen einzusetzen. Gewöhnlich wird das BSP in Quellform vom Hersteller zur Verfügung gestellt, damit der Hardware-Hersteller das Betriebssystem auf seine Hardware anpassen kann.

Das Betriebssystem weist weiter Architekturdienste AD auf, die die für das Betriebssystem notwendigen Schnittstellen zu den zentralrechner-spezifischen Diensten, wie Exception- und Interrupt-Bearbeitung, MMU-Verwaltung bilden. Die AD ermöglichen es dem Betriebssystem, auf verschiedenen Zentralprozessoreinheits-Plattformen (CPU-Plattform) zu arbeiten.

Das Betriebssystem weist darüber hinaus generische Betriebssystem-Dienste BSD auf, die Anwendungssoftware AS (AS1, AS2) hochwertige Dienste, wie Speicherverwaltung, Netzwerk-Dienste, Multitasking-Dienste etc. zur Verfügung stellen. Bei einem Betriebssystem steht üblicherweise lediglich das BSP in Quellform zur Verfügung, während Anpassungen der Architektur- und den generischen Betriebssystem-Diensten nicht möglich sind. Weiter sind die den beiden Betriebssystem angeordneten physikalischen Speicher PS1 und PS2 sowie die Teile der Interruptkontrollen IC1 und IC2 dargestellt, die die Interupts für das PBS bzw. das SBS ansteuern

Wie aus der Fig. 1 entnehmbar ist, werden wichtige Ressourcen des Rechners für das Betriebssystem wie folgt zugeordnet:

Beide Betriebssysteme verwenden, jeweils zum Zeitpunkt ihrer Aktivität den gesamten virtuellen Speicher VS und sämtliche CPU-Register CPU-R, wie insbesondere Standardregister, Floating-Point-Register, Steuer-Register. Beide Betriebssysteme teilen sich zunächst den Random-Access-Speicher RAM, wobei jedes Betriebssystem einen Teil dieses Speichers besitzt und das Sekundär-Betriebssystem SBS vorzugsweise in den oberen Teil des Random-Access-Speichers RAM geladen ist. Sie teilen sich weiterhin den Interrupt-Controller IRC, wobei jedem Betriebssystem eindeutige Interrupts zugeordnet sind.

Das Sekundär-Betriebssystem hat insbesondere alleinigen Zugriff zum Systemzeitgeber SZG, während das Primär-Betriebssystem PBS alleinigen Zugriff auf die Festplatte FP hat. Dem jeweiligen Betriebssystem sind Treiber T1 (des Primär-Betriebssystems) bzw. T2 (des Sekundär-Betriebssystems) unter anderem zur Verwaltung der jeweiligen dem entsprechenden Betriebssystem Zusatzhardware ZHP für das Primär- bzw. Sekundär-Betriebssystem ZHS zugeordnet.

Einer der Treiber des Primär-Betriebssystems ist der Treiber SBS-T zum Laden des Sekundär-Betriebssystems.

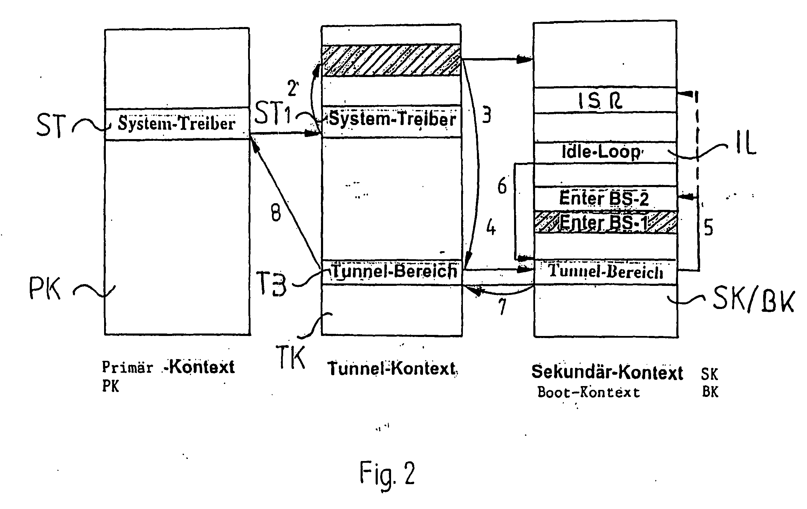

In der Fig. 2 ist das Laden des Sekundär-Betriebssystems SBS dargestellt.

Hierbei wird zunächst vorausgesetzt, dass das Primär-Betriebssystem PBS in üblicher Weise mittels eines Bootladers in den Speicher des Rechners geladen ist und dabei auch der System-Treiber SBS-T für das Sekundär-Betriebssystem SBS mitgeladen wurde.

Nach Laden des Primär-Betriebssystems PBS lädt der SBS-T zunächst das Sekundär-Betriebssystem SBS in einen separaten vom Primär-Betriebssystem PBS nicht verwendeten Speicherbereich des RAM-Speichers, vorzugsweise den oberen Bereich des physikalischen RAMs, so dass der Sekundär-Betriebssystem-Treiber SBS-T den Boot-Lader für das Sekundär-Betriebssystem SBS bildet.

Neben dem in üblicher Weise aufgesetzten Speicherkontext für das Primär-Betriebssystem PBS, aufgesetzt durch dasselbe, wird zum Einsatz des Sekundär-Betriebssystems zunächst durch den System-Treiber ein Kontext BK zum Booten des Sekundär-Betriebssystems und ein Tunnel-Kontext TK in der CPU zum Wechsel zwischen den Kontexten PK des Primär-Betriebssystems und dem BK aufgesetzt.

Der Einsprung aus dem System-Treiber SBS-T in das Sekundär-Betriebssystem erfolgt nach dem Ladevorgang in das Board Support Package des Sekundär-Betriebssystems (Schritte 1 bis 2 der Fig. 2). Der System-Treiber SBS-T wird, wie der Pfeil andeutet, ausschließlich für den Wechsel vom Primärzum Sekundär-Betriebssystem benötigt. Sodann wird die Programmbearbeitung im Board Support Package des Sekundär-Betriebssystems fortgesetzt. Das Board Support Package setzt dabei den zum Booten des SBS benötigten Kontext BK auf. Anschließend wird der Programmablauf in den Tunnel-Bereich TB des Tunnel-Kontext TK verzweigt (Schritt 3), der Boot-Kontext BK geladen (Schritt 4) und der Bootvorgang des Sekundär-Betriebssystems fortgesetzt (Schritt 5). Hierbei setzt das SBS seinen eigenen Kontext auf, in welchen bei jedem zukünftigen Wechsel vom PBS ins SBS verzweigt wird.

Der Tunnel-Bereich enthält hierzu den "Umschaltcode" zwischen dem Bootlader- bzw. Sekundär-Kontext und dem Tunnel-Kontext. Der Tunnel-Bereich besteht aus genau einer Speicherseite, in welchem der Umschaltcode abgelegt ist. Dieser Umschaltcode befindet sich in allen Kontexten (Tunnel-Kontext und Bootlader- bzw. Sekundär-Kontext) an derselben virtuellen Adresse.

Nach dem Wechsel in das Sekundär-Betriebssystem SBS und bei dessen Betrieb, wird der System-Treiber SBS-T vom Sekundär-Betriebssystem nicht mehr benötigt, greift auf diesen oder auf sonstige Teile des Primär-Betriebssystems PBS nicht zu und verwendet diese nicht. Das Sekundär-Betriebssystem arbeitet insofern völlig autonom.

Gelangt das Sekundär-Betriebssystem SBS in einen Ruhezustand IL (Idle-Loop), so erfolgt automatisch ein Rücksprung in das Primär-Betriebssystem (Schritt 6, 7, 8). Solange das Sekundär-Betriebssystem aktiv ist, werden auftretende Unterbrechungs-Aufrufe ausschließlich vom Sekundär-Betriebssystem SBS bearbeitet.

Vor dem Laden des Sekundär-Betriebssystems SBS - und bei jedem Wechsel zu diesem - werden sämtliche Register der CPU des Primär-Betriebssystems gespeichert und die CPU-internen Caches werden geleert.

Beim Laden des Sekundär-Betriebssystems - und beim Wechsel in dasselbe - werden sämtliche CPU-Register des Sekundär-Betriebssystems SBS und dessen MMU-Tabellen geladen.

Beim Wechsel vom Sekundär-Betriebssystem SBS zum Primär-Betriebssystem PBS erfolgt das Sichern der Systemzustände des Sekundär-Betriebssystems und das Laden der Systemzustände für das Primär-Betriebssystem in entsprechender Weise.

Wenn die zentrale Rechnereinheit (CPU) einen direkten Wechsel von Kontexten unterstützt, wie es beispielsweise bei der Intel-X86-Architektur via Task-Safe-Segmente der Fall ist, kann auch auf den Tunnel-Kontext verzichtet werden, so dass der Wechsel zwischen den Betriebssystemen direkt über Primär-Kontext PK und Sekundär-Kontext SK erfolgen kann.

Ein Wechsel von der Aktivität des Primär-Betriebssystems PBS zum Aufruf und zur Aktivität des Sekundär-Betriebssystems SBS erfolgt ausschließlich auf einen für letzteres bestimmten Unterbrechungsaufruf (Interrupt) hin. Beim Auftreten eines solchen werden der System-Treiber ST und das BSP des Sekundär-Betriebssystems in den Speicherkontext SK des Sekundär-Betriebssystems SBS verzweigen und dort die entsprechende zugeordnete Unterbrechungs-Dienst-Routine abarbeiten.

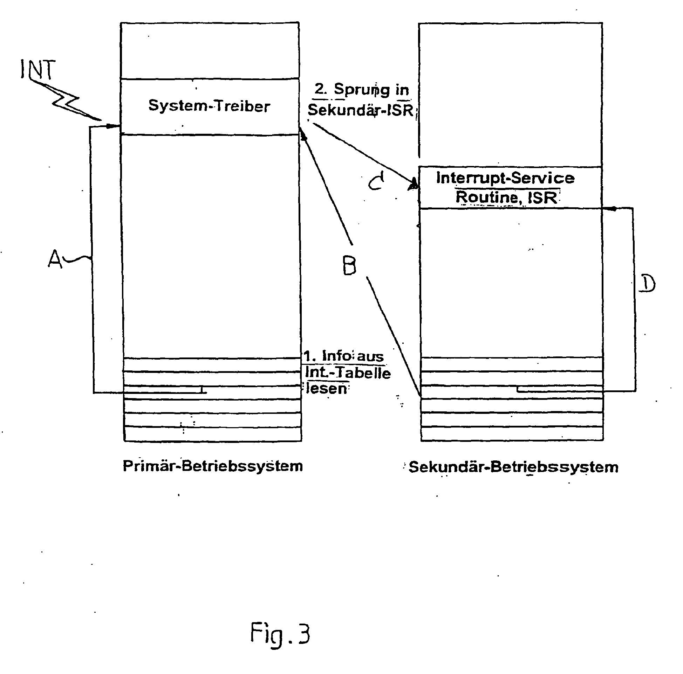

Bei Aktivität des Primär-Betriebssystems werden zum Wechsel zum Sekundär-Betriebs-Systems demgemäß die in Fig. 3 dargestellten Schritte durchgeführt:

Wenn das Primär-Betriebssystem aktiv ist und ein Unterbrechungs-Ablauf (Interrupt) erfolgt, verzweigt die zentrale Rechnereinheit aufgrund der Interrupt-Anforderung direkt in den System-Treiber (Schritt A) - der Interrupt wird vom System-Treiber abgefangen. Der System-Treiber ST sichert sämtliche Prozessor-Register und wechselt in den Tunnel-Kontext TK (Fig. 2). Der System-Treiber verzweigt direkt in die generische Interrupt-Bearbeitung des BSP des Sekundär-Betriebssystems. Hier wird unmittelbar anhand bzw. durch Zugriff auf die der Interrupt-Tabelle des Sekundär-Betriebssystems ermittelt, wo die Interrupt-Service-Routine ISR des Sekundär-Betriebssystems liegt, wohin die Bearbeitung verzweigen soll (Schritt B).

Die generische Interrupt-Bearbeitung, verzweigt vom System-Treiber über die Tunneling-Funktion, welche den Sekundär-Betriebssystem-Kontext SK aktiviert (Schritt C), direkt dann in die Interrupt-Bearbeitungsfunktion ISR im Sekundär-Betriebssystem SBS (Schritt D) - und nicht über irgendeinen speziellen Code des Sekundär-Betriebssystems, der erfindungsgemäß so nicht notwendig und nicht vorhanden ist.

Anschließend wird das Sekundär-Betriebssystem SBS so lange abgearbeitet, bis sämtliche Prozesse ihre Rechenzeit abgeben und dadurch in die Ruhe-Schleife (Idle-Loop) des Sekundär-Betriebssystems SBS verzweigt wird.

Wenn das Sekundär-Betriebssystem SBS aktiv ist und ein Interrupt für dieses selbst auftritt, erfolgt der Aufruf der Interrupt Service Routine ISR automatisch ohne weitere Eingriffe. Der Prozessor selbst springt dort hin, da beim Wechsel vom Primär-Betriebssystem in an sich üblicher Weise zum Sekundär-Betriebssystem im Prozessor die Interrupt-Tabelle ausgetauscht wird, also bei diesem Wechsel die Interrupt-Tabelle des Sekundär-Betriebssystems SBS gesetzt wird. Es wird in Fig. 3 also ausschließlich Schritt D aufgezeigt. Deshalb ist es auch möglich, das Primär-Betriebssystem PBS und dessen System-Treiber zu löschen, ohne Einschränkungen für das Sekundär-Betriebssystem SBS zu erfahren.

Von der Ruhe-Schleife aus wird dann über den Tunnel-Bereich in den Tunnel-Kontext TK gewechselt (Schritt 6, 7 in Fig. 2). Die Tunnel-Funktion kehrt dann wieder in den System-Treiber des Primär-Betriebssystems PBS zurück (Schritt 8), von wo aus dieser wieder den Primär-Kontext PK aktiviert und den Betrieb des Primär-Betriebssystems PBS fortsetzt.

Alternativ zur Verwendung der Ruhe-Schleife IL des Sekundär-Betriebssystems SBS als Einsprungspunkt zum Wechsel in das Primär-Betriebssystem existiert die Möglichkeit, über einen regulären Prozess im Sekundär-Betriebssystem SBS diesen Wechsel anzustoßen. Hierzu existiert im SBS eine Funktion des Sekundär-Betriebssystems SBS, welche von Prozessen aufgerufen werden kann. Der Aufruf verzweigt dann wieder zurück zum Primär-Betriebssystem (Schritt 6 bis 8) so lange, bis der nächst Interrupt für das Sekundär-Betriebssystem SBS auftritt.

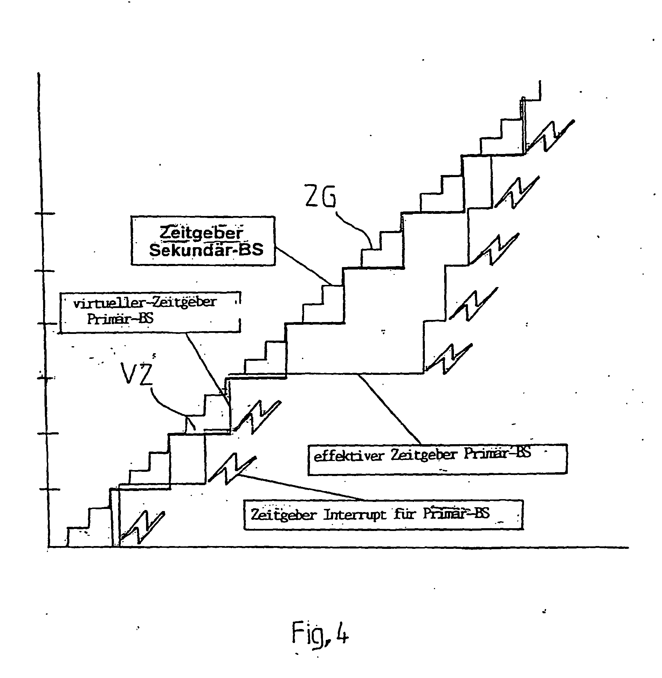

Wie schon oben gesagt, wird der Haupt-Systemzeitgeber HSZG vom Sekundär-Betriebssystem SBS gesteuert. Hierzu wird das Primär-Betriebssystem dahingehend geändert, beispielsweise durch Patches, dass sämtliche Zugriffe auf den Haupt-Systemzeitgeber HSZG durch den System-Treiber ST abgefangen werden. Dieser speichert Informationen dahingehend, mit welcher Taktrate das Primär-Betriebssystem PBS betrieben werden soll. Die Taktrate im Sekundär-Betriebssystem muss dabei höher sein als die des Primär-Betriebssystems. Zur Synchronisation des Timers des Primär-Betriebssystems läuft, wie dies in der Fig. 4 dargestellt ist, neben dem Hauptzeitgeber HZG im System-Treiber ein virtueller Zeitgeber VZ - mit geringerer Taktrate - mit, welcher immer dann um die Taktrate des Primär-Betriebssystems PBS implementiert wird, sobald die entsprechende Zeit tatsächlich abgelaufen ist. Gibt das Sekundär-Betriebssystem die Rechenzeit für einen längeren Zeitraum nicht ab, so läuft anschließend die Uhr für das Primär-Betriebssystem so lange schneller, bis die Zeitdifferenz wieder aufgeholt wird und zwar im Takt des Zeitgebers des Sekundär-Betriebssystems. Dadurch wird erreicht, dass die Uhr im Primär-Betriebssystem nicht nachgeht.

### Bezugszeichenliste

- AD: Architekturdienste
- BHD: Basis-Hardwaredienste
- BSD: Betriebssystem-Dienste
- BSP: Board-Support-Package
- CPU: Zentralprozessoreinheit
- CPU-R: CPU-Register
- FP: Festplatte
- HR: Hardware-Ressourcen
- IC1: Teil des Interrupts-Controllers, der die Interrupts für das PBS ansteuert
- IC2: Teil des Interrupts-Controllers, der die Interrupts für das SBS ansteuert
- IL: Idle-Loop
- IRC: Interrupt-Controller
- K: Kernel
- PBS: Primär-Betriebssystem
- PK: Kontext des Primär-Betriebssystems
- PS1: physikalischer Speicher, welcher dem PBS zugeordnet ist
- PS2: physikalischer Speicher, welcher dem SBS zugeordnet ist
- RAM: Random-Access-Speicher
- SBS: Sekundär-Betriebssystem
- SBS-T: Treiber zum Laden des Sekundär-Betriebssystems
- SK: Kontext des Sekundär-Betriebssystems
- SK: Speicherkontext
- ST-T: Systemtreiber-Bereich
- SZG: Systemzeitgeber
- T1: Treiber des Primär-Betriebssystems
- T2: Treiber des Sekundär-Betriebssystems
- TB: Tunnelbereich
- TK: Tunnel-Kontext
- ZHP: Zusatzhardware des Primär-Betriebssystems
- ZHS: Zusatzhardware des Sekundär-Betriebssystems

## Patentansprüche

1. Verfahren zum Betreiben (Implementieren) eines Sekundär-Betriebssystems auf einem Prozessor neben einem Primär-Betriebssystem, mit einem durch einen Unterbrechungsaufruf (Interrupt) hervorgerufenen Wechsel vom Primär-Betriebssystem zum Sekundär-Betriebssystem, **dadurch gekennzeichnet, dass** zum Laden und Ansteuern des Sekundär-Betriebssystems ein Sekundär-Betriebssystem-Treiber (SBS-Treiber) des Primär-Betriebssystems geladen und aktiviert wird, dass beim Unterbrechungs-Aufruf ein Austausch der Interrupt-Tabellen der Betriebssysteme erfolgt und dass der Sekundär-Betriebssystem-Treiber die in der Interrupt-Tabelle des Sekundär-Betriebssystems abgespeicherte Information, an welcher Stelle im Sekundär-Betriebssystem die Abarbeitung des Unterbrechungs-Aufrufs zu erfolgen hat, mittels einer Unterbrechungs-Aufruf-Behandlungsroutine ermittelt.

2. Verfahren nach Anspruche 1, **dadurch gekennzeichnet, dass** in der Zentraleinheit des Rechners (CPU) Speicherkontexte (virtuelle Arbeitsräume) geschaffen werden.

3. Verfahren nach einem der Ansprüche 1 oder 2, **dadurch gekennzeichnet, dass** ein Wechsel zwischen den Betriebssystemen mittels des SBS-Treibers des Primär-Betriebssystems und des Platinen-Unterstützungs-Pakets (BSP) erfolgt.

4. Verfahren nach einem der Ansprüche 1 bis 3, **dadurch gekennzeichnet, dass** das Sekundär-Betriebssystem einen Wechsel zum Primär-Betriebsystem steuert.

5. Verfahren nach Anspruch 4, **dadurch gekennzeichnet, dass** ein Wechsel vom Sekundär-Betriebssystem zum Primär-Betriebssystem bei Ruhen des Sekundär-Betriebssystems (Eintritt in Idle-Loop) erfolgt.

6. Verfahren nach Anspruch 5, **dadurch gekennzeichnet, dass** ein Wechsel vom Sekundär-Betriebssystem zum Primär-Betriebssystem durch einen Befehl im Programmablauf des Sekundär-Betriebssystems erfolgt.

7. Verfahren nach einem der vorangehenden Ansprüche, **dadurch gekennzeichnet, dass** der Wechsel zwischen den Betriebssystemen mittels in einem Tunnelbereich des Speichers abgelegten Programmcode erfolgt.

8. Verfahren nach einem der vorangehenden Ansprüche, **dadurch gekennzeichnet, dass** Unterbrechungs-Aufrufe des Primär-Betriebssystems während des Ablaufs des Sekundär-Betriebssystems gesperrt werden.

9. Verfahren nach einem der vorangehenden Ansprüche, **dadurch gekennzeichnet, dass** eine Unterbrechungs-Behandlungsroutine im SBS-Treiber die Unterbrechungs-Aufruf-Tabelle des Sekundär-Betriebssystems liest und die Verarbeitung des letzteren an der den Unterbrechungs-Aufruf betreffenden Stelle erfolgt bzw. fortgesetzt wird.

10. Verfahren nach einem der vorangehenden Ansprüche, **dadurch gekennzeichnet, dass** der Systemtreiber für jeden dem Sekundär-Betriebssystem zugeordneten Interrupt (der also einen Unterbrechungs-Aufruf im Sekundär-Betriebssystem auslösen soll) einen Eintrag in der Unterbrechungs-Aufruf-Tabelle im Primär-Betriebssystem erzeugt, die dann wiederum einen Aufruf der entsprechenden Interrupt-Behandlungsroutine im Sekundär-Betriebssystem auslöst.

11. Verfahren nach einem der vorangehenden Ansprüche, **dadurch gekennzeichnet, dass** bei Aktivität des Sekundär-Betriebssystems (SBS) auf eine Unterbrechungsanforderung durch die in der Unterbrechungs-Aufruf-Tabelle des Sekundär-Betriebssystems abgespeicherte Information, an welcher Stelle im Sekundär-Betriebssystem die Abarbeitung des Unterbrechungs-Aufrufs (Interrupts) zu erfolgen hat, die Unterbrechungs-Aufruf-Behandlungsroutine des Sekundär-Betriebssystems (SBS) direkt ohne Umweg über den System-Treiber, nur durch das Sekundär-Betriebssystem aufgerufen wird.

12. Verfahren nach einem der Ansprüche 9 bis 11, **dadurch gekennzeichnet, dass** nach Auftreten eines entsprechenden Unterbrechungs-Aufrufs und der Ermittlung der Stel- .. le im Sekundär-Betriebssystem, an welcher die Abarbeitung des Interrupts zu erfolgen hat, die Verarbeitung desselben an der dem Unterbrechungs-Aufruf betreffenden Stelle im Sekundär-Betriebssystem fortgesetzt wird.

13. Verfahren nach einem der vorangehenden Ansprüche, **dadurch gekennzeichnet, dass** beim Wechsel von einem Betriebssystem zum anderen alle Systemzustände des einen Betriebssystems gespeichert werden.

14. Verfahren nach einem der vorangehenden Ansprüche, **dadurch gekennzeichnet, dass** beim Wechsel von einem Betriebssystem zum anderen Betriebssystem alle Systemzustände des anderen Betriebssystems geladen werden.

15. Verfahren nach einem der vorangehenden Ansprüche, **dadurch gekennzeichnet, dass** die Taktgenerierung für das Sekundär-Betriebssystem durch den Hardware-Hauptzeitgeber (Timer) erfolgt.

16. Verfahren nach einem der vorangehenden Ansprüche, **dadurch gekennzeichnet, dass** die Taktgenerierung für das Primär-Betriebssystem durch einen Takt-Systemtreiber erfolgt.

17. Vorrichtung zum Betreiben eines Sekundär-Betriebssystems auf einem Prozessor neben einem Primär-Betriebssystem mit einem durch einen Unterbrechungsaufruf (Interrupt) hervorgerufenen Wechsel vom Primär-Betriebssystem zum Sekundär-Betriebssystem, **gekennzeichnet durch** einen Sekundär-Betriebssystem-Treiber (SBS-Treiber) des Primär-Betriebssystems zum.Laden und Ansteuern des Sekundär-Betriebssystems, wobei zur Abarbeitung des Unterbrechungs-Aufrufs eine Austauschfunktion der Interrupt-Tabellen der Betriebssysteme vorgesehen und im SBS-Treiber eine Unterbrechungs-Aufruf-Behandlungsroutine zur Ermittlung der in der Interrupt-Tabelle des Sekundär-Betriebssystems abgespeicherten Information ausgebildet ist, an welcher Stelle im Sekundär-Betriebssystem die Abarbeitung des Unterbrechungs-Aufrufs zu erfolgen hat.

18. Vorrichtung nach Anspruch 17, **dadurch gekennzeichnet, dass** der SBS-Treiber eine Tunnel-Kontext-Aufsetz-Routine zum Aufsetzen eines Tunnel-Kontextes in der Zentraleinheit (CPU) aufweist.

19. Vorrichtung, insbesondere nach Anspruch 17 oder 18, **dadurch gekennzeichnet, dass** sie zum Austausch der Interrupt-Tabellen bei einem Wechsel der Aktivität der Betriebssysteme ausgebildet ist.

20. Vorrichtung nach Anspruch 17 oder 19, **dadurch gekennzeichnet, dass** der SBS-Treiber eine Unterbrechungs-Aufruftabellen-Änderungs-Routine aufweist zur Erzeugung von Einträgen in der Unterbrechungs-Aufruf-Tabelle des Primär-Betriebssysstems, die zumindest Einträge für die Unterbrechungs-Aufrufe für das Sekundär-Betriebssystem vornimmt.

21. Vorrichtung nach einem der Ansprüche 17 bis 20, **dadurch gekennzeichnet, dass** das Board-Support-Paket (BSP) einen Abschnitt zum Rücksprung in das Primär-Betriebssystem (PBS) aufweist.

22. Vorrichtung nach einem der Ansprüche 17 bis 21, **dadurch gekennzeichnet, dass** der Sekundär-Betriebssystem-Treiber (SBS-Treiber) einen Unterbrechungs-Tabellen-Abschnitt aufweist, mittels dessen er im Primär-Betriebssystem eine Unterbrechungsaufruf-Tabelle (Interrupt-Tabelle) erzeugt, die einen Aufruf einer Unterbrechungs-Behandlungsroutine zum Aufruf des Sekundär-Betriebssystems enthält.

23. Vorrichtung nach einem der Ansprüche 17 bis 22, **dadurch gekennzeichnet, dass** der System-Treiber zum Erzeugen eines Eintrags in der Unterbrechungs-Aufruf-Tabelle im Primär-Betriebssystem (PBS) für jeden dem Sekundär-Betriebssystem (SBS) zugeordneten Interrupt (der also einen Unterbrechungs-Aufruf im Sekundär-Betriebssystem (SBS) auslösen soll), und dass die Unterbrechungs-Aufruf-Tabelle zum Aufruf der entsprechenden Interrupt-Behandlungsroutine im Sekundär-Betriebssystem (SBS) ausgebildet ist.

24. Vorrichtung nach einem der Ansprüche 18 bis 23, **dadurch gekennzeichnet, dass** sie dazu ausgebildet ist, bei Aktivität des Sekundär-Betriebssystems (SBS) auf eine Unterbrechungsanforderung durch die in der Unterbrechungs-Aufruf-Tabelle des Sekundär-Betriebssystems gespeicherte Information, an welcher Stelle im Sekundär-Betriebssystem die Abarbeitung des Unterbrechungs-Aufrufs (Interrupts) zu erfolgen hat, die Unterbrechungs-Aufruf-Behandlungsroutine des Sekundär-Betriebssystems (SBS) direkt ohne Umweg über den System-Treiber, nur durch das Sekundär-Betriebssystem aufzurufen.

## Claims

1. A method for operating (implementing) a secondary operating system on a processor in addition to a primary operating system, involving a switch from the primary operating system to the secondary operating system brought about by an interrupt call (interrupt), **characterised in that** a secondary operating system driver (SOS driver) of the primary operating system is loaded and activated for loading and controlling the secondary operating system, **in that** the interrupt tables of the operating systems are exchanged during the interrupt call and **in that** the secondary operating system driver determines by means of an interrupt service routine the information stored in the interrupt table of the secondary operating system as to the point in the secondary operating system at which the interrupt call is to be serviced.

2. A method according to claim 1, **characterised in that** memory contexts (virtual operating areas) are created in the computer's central processing unit (CPU)

3. A method according to either of claim 1 or claim 2, **characterised in that** a switch between operating systems proceeds by means of the SOS driver of the primary operating system and the board support package (BSP).

4. A method according to any one of claims 1 to 3, **characterised in that** the secondary operating system controls a switch to the primary operating system.

5. A method according to claim 4, **characterised in that** a switch from the secondary operating system to the primary operating system proceeds when the secondary operating system is idle (entry into idle loop).

6. A method according to claim 5, **characterised in that** a switch from the secondary operating system to the primary operating system proceeds by an instruction in the program sequence of the secondary operating system.

7. A method according to any one of the preceding claims, **characterised in that** the switch between operating systems proceeds by means of program code filed in a tunnel zone of the memory device.

8. A method according to any one of the preceding claims, **characterised in that** interrupt calls from the primary operating system are blocked while the secondary operating system is running.

9. A method according to any one of the preceding claims, **characterised in that** an interrupt service routine in the SOS driver reads the interrupt table of the secondary operating system and processing of the latter proceeds or is continued at the point to which the interrupt call relates.

10. A method according to any one of the preceding claims, **characterised in that** the system driver for each interrupt assigned to the secondary operating system (which is thus intended to trigger an interrupt call in the secondary operating system) generates an entry in the interrupt table in the primary operating system, which then in turn triggers a call to the corresponding interrupt service routine in the secondary operating system.

11. A method according to any one of the preceding claims, **characterised in that**, in the case of activity of the secondary operating system (SOS), in response to an interrupt request by the information stored in the interrupt table of the secondary operating system as to the point in the secondary operating system at which the interrupt call (interrupt) is to be serviced, the interrupt service routine of the secondary operating system (SOS) is called directly solely by the secondary operating system without passing via the system driver.

12. A method according to any one of claims 9 to 11, **characterised in that**, once a corresponding interrupt call has occurred and the point in the secondary operating system at which the interrupt is to be serviced has been determined, processing of the interrupt is continued in the secondary operating system at the point to which the interrupt call relates.

13. A method according to any one of the preceding claims, **characterised in that**, on switching from one operating system to the other, all system states of the one operating system are stored.

14. A method according to any one of the preceding claims, **characterised in that**, on switching from one operating system to the other operating system, all system states of the other operating system are loaded.

15. A method according to any one of the preceding claims, **characterised in that** clock pulses for the secondary operating system are generated by the main hardware timer.

16. A method according to any one of the preceding claims, **characterised in that** clock pulses for the primary operating system are generated by a clock pulse system driver.

17. A device for operating a secondary operating system on a processor in addition to a primary operating system involving a switch from the primary operating system to the secondary operating system brought about by an interrupt call (interrupt), **characterised by** a secondary operating system driver (SOS driver) of the primary operating system for loading and controlling the secondary operating system, a function for exchanging the interrupt tables of the operating systems being provided for servicing the interrupt call and an interrupt service routine being provided in the SOS driver for determining the information stored in the interrupt table of the secondary operating system as to the point in the secondary operating system at which the interrupt call is to be serviced.

18. A device according to claim 17, **characterised in that** the SOS driver comprises a tunnel context updating routine to update a tunnel context in the central processing unit (CPU).

19. A device, in particular according to claim 17 or claim 18, **characterised in that** it is configured to exchange the interrupt tables in the event of a switch in the activity of the operating systems.

20. A device according to claim 17 or claim 19, **characterised in that** the SOS driver comprises an interrupt table change routine to generate entries in the interrupt table of the primary operating system, which at least makes entries for the interrupt calls for the secondary operating system.

21. A device according to any one of claims 17 to 20, **characterised in that** the board support package (BSP) comprises a section for return to the primary operating system (POS).

22. A device according to any one of claims 17 to 21, **characterised in that** the secondary operating system driver (SOS driver) comprises an interrupt tables section by means of which it generates an interrupt table in the primary operating system, which interrupt table contains a call for an interrupt service routine for calling the secondary operating system.

23. A device according to any one of claims 17 to 22, **characterised in that** the system driver is configured to generate an entry in the interrupt table in the primary operating system (POS) for each interrupt assigned to the secondary operating system (SOS) (which is thus intended to trigger an interrupt call in the secondary operating system (SOS)), and **in that** the interrupt table is configured to call the corresponding interrupt service routine in the secondary operating system (SOS).

24. A device according to any one of claims 18 to 23, **characterised in that** it is configured, in the case of activity of the secondary operating system (SOS), in response to an interrupt request by the information stored in the interrupt table of the secondary operating system as to the point in the secondary operating system at which the interrupt call (interrupt) is to be serviced, to call the interrupt service routine of the secondary operating system (SOS) directly solely by the secondary operating system without passing via the system driver.

## Revendications

1. Procédé pour faire fonctionner (implémenter) un système d'exploitation secondaire sur un processeur à côté d'un système d'exploitation primaire, avec commutation du système d'exploitation primaire au système d'exploitation secondaire provoquée par un appel d'interruption (Interrupt), **caractérisé en ce que** pour charger et amorcer le système d'exploitation secondaire un pilote de système d'exploitation secondaire (pilote SES) du système d'exploitation primaire est chargé et activé, **caractérisé** également **en ce que** lors de l'appel d'interruption, un échange a lieu entre les tables d'interruption des systèmes d'exploitation, **caractérisé en ce que** le pilote du système d'exploitation secondaire détermine à l'aide d'une routine de traitement des appels d'interruption l'information enregistrée dans la table d'interruption du système d'exploitation secondaire indiquant à quel endroit du système d'exploitation secondaire doit être exécuté l'appel d'interruption.

2. Procédé selon la revendication 1, **caractérisé en ce que** dans l'unité centrale de l'ordinateur (CPU) sont créés des contacts de mémoire (espaces de travail virtuels).

3. Procédé selon une des revendications 1 ou 2, **caractérisé en ce qu'**une commutation a lieu entre les systèmes d'exploitation par l'intermédiaire du pilote SES du système d'exploitation primaire et du pack d'assistance de platine (PSE).

4. Procédé selon une des revendications 1 à 3, **caractérisé en ce que** le système d'exploitation secondaire commande une commutation vers le système d'exploitation primaire.

5. Procédé selon la revendication 4, **caractérisé en ce qu'**une commutation a lieu du système d'exploitation secondaire au système d'exploitation primaire quand le système d'exploitation secondaire est au repos (entrée dans la boucle de repos).

6. Procédé selon la revendication 5, **caractérisé en ce qu'**une commutation a lieu du système d'exploitation secondaire au système d'exploitation primaire par une instruction dans le déroulement du programme du système d'exploitation secondaire.

7. Procédé selon une des revendications qui précédent, **caractérisé en ce qu'**une commutation a lieu entre les systèmes d'exploitation par l'intermédiaire d'un code de programme stocké dans une zone tunnel de la mémoire.

8. Procédé selon une des revendications qui précèdent, **caractérisé en ce que** des appels d'interruption du système d'exploitation primaire sont interdits pendant le déroulement du système d'exploitation secondaire.

9. Procédé selon une des revendications qui précèdent, **caractérisé en ce qu'**une routine de traitement des interruptions dans le pilote SES lit la table des appels d'interruption du système d'exploitation secondaire, le traitement de ce dernier ayant lieu ou se poursuivant à l'endroit concerné par l'appel d'interruption.

10. Procédé selon une des revendications qui précèdent, **caractérisé en ce que** le pilote de système génère une inscription dans la table des appels d'interruption dans le système d'exploitation primaire pour chaque interruption affectée au système d'exploitation secondaire (ladite interruption devant donc déclencher un appel d'interruption dans le système d'exploitation secondaire), ladite inscription déclenchant à son tour un appel de la routine de traitement des interruptions correspondante dans le système d'exploitation secondaire.

11. Procédé selon une des revendications qui précèdent, **caractérisé en ce que**, lors de l'activité du système d'exploitation secondaire (SES) sur un appel d'interruption par l'information enregistrée dans la table des appels d'interruption du système d'exploitation secondaire et indiquant l'endroit du système d'exploitation secondaire où doit être exécuté l'appel d'interruption (interrupt), la routine de traitement des appels d'interruption du système d'exploitation secondaire (SES) est appelée directement et uniquement par le système d'exploitation secondaire, sans passer par le pilote du système.

12. Procédé selon une des revendications 9 à 11, **caractérisé en ce qu'**après que soit survenu un appel d'interruption correspondant et qu'ait été déterminé l'endroit du système d'exploitation secondaire où l'interruption doit être exécutée, le traitement de cette dernière se poursuit à l'endroit correspondant à l'appel d'interruption dans le système d'exploitation secondaire.

13. Procédé selon une des revendications qui précèdent, **caractérisé en ce que** lors de la commutation d'un système d'exploitation à l'autre, tous les états du premier système d'exploitation sont enregistrés.

14. Procédé selon une des revendications qui précèdent, **caractérisé en ce que** lors de la commutation d'un système d'exploitation à l'autre, tous les états de l'autre système d'exploitation sont chargés.

15. Procédé selon une des revendications qui précèdent, **caractérisé en ce que** les cycles fixes du système d'exploitation secondaire sont générés par l'horloge interne principale (temporisateur).

16. Procédé selon une des revendications qui précèdent, **caractérisé en ce que** les cycles fixes du système d'exploitation primaire sont générés par un pilote du système rythmeur.

17. Dispositif pour faire fonctionner un système d'exploitation secondaire sur un processeur à côté d'un système d'exploitation primaire avec commutation du système d'exploitation primaire au système d'exploitation secondaire provoquée par un appel d'interruption (interrupt), **caractérisé par** un pilote du système d'exploitation secondaire (pilote SES) du système d'exploitation primaire pour charger et amorcer le système d'exploitation secondaire, une fonction d'échange entre les tables d'interruption des systèmes d'exploitation étant prévue pour exécuter l'appel d'interruption, une routine de traitement des appels d'interruption étant développée dans le pilote SES pour déterminer l'information stockée dans la table des interruptions du système d'exploitation secondaire et indiquant l'endroit du système d'exploitation secondaire où doit être exécuté l'appel d'interruption.

18. Dispositif selon la revendication 17, **caractérisé en ce que** le pilote SES présente une routine de pose d'un contexte tunnel pour poser dans l'unité centrale (CPU) un contexte tunnel.

19. Dispositif selon notamment la revendication 17 ou 18, **caractérisé en ce qu'**il est formé pour un échange entre les tables d'interruption lors d'une commutation de l'activité des systèmes d'exploitation.

20. Dispositif selon la revendication 17 ou 19, **caractérisé en ce que** le pilote SES présente une routine de modification des tables d'appel d'interruption pour créer des inscriptions dans la table d'appel d'interruption du système d'exploitation primaire, ladite routine procédant au moins aux inscriptions des appels d'interruption pour le système d'exploitation secondaire.

21. Dispositif selon une des revendications 17 à 20, **caractérisé en ce que** le pack d'assistance de platine (PAP) présente une section pour un retour rapide dans le système d'exploitation primaire (SEP).

22. Dispositif selon une des revendications 17 à 21, **caractérisé en ce que** le pilote du système d'exploitation secondaire (pilote SES) présente une section de tables d'interruption par l'intermédiaire de laquelle il génère une table d'appels d'interruption (interrupt table) dans le système d'exploitation primaire, laquelle table comprenant l'appel d'une routine de traitement des interruptions pour l'appel du système d'exploitation secondaire.

23. Dispositif selon une des revendications 17 à 22, **caractérisé en ce que** le pilote de système générant une inscription dans la table des appels d'interruptions dans le système d'exploitation primaire (SEP) pour chaque interruption affectée au système d'exploitation secondaire (SES) (ladite inscription devant donc déclencher un appel d'interruption dans le système d'exploitation secondaire (SES)), et **en ce que** la table des appels d'interruption est formée pour appeler la routine correspondante de traitement des interruptions dans le système d'exploitation secondaire (SES).

24. Dispositif selon une des revendications 18 à 23, **caractérisé en ce qu'**il est formé pour appeler, lors de l'activité du système d'exploitation secondaire (SES) sur un appel d'interruption par l'information enregistrée dans la table des appels d'interruption du système d'exploitation secondaire et indiquant l'endroit du système d'exploitation secondaire où doit être exécuté l'appel d'interruption (interrupt), la routine de traitement des appels d'interruption du système d'exploitation secondaire (SES) directement et uniquement par le système d'exploitation secondaire, sans passer par le pilote du système.
